(19) Europäisches Patentamt
European Patent Office
Office européen des brevets

(11) Veröffentlichungsnummer: **0 358 148**
**A2**

(12) **EUROPÄISCHE PATENTANMELDUNG**

(21) Anmeldenummer: **89116294.3**

(22) Anmeldetag: **04.09.89**

(51) Int. Cl.5: **C09B 67/22 , C09B 57/04 , C08K 5/34**

(30) Priorität: **06.09.88 CH 3331/88**

(43) Veröffentlichungstag der Anmeldung:
**14.03.90 Patentblatt 90/11**

(84) Benannte Vertragsstaaten:
**DE FR GB IT**

(71) Anmelder: **CIBA-GEIGY AG**
**Klybeckstrasse 141**
**CH-4002 Basel(CH)**

(72) Erfinder: **Bäbler, Fridolin, Dr.**
**Route du Couchant 12**
**CH-1723 Marly(CH)**
Erfinder: **von der Crone, Jost, Dr.**
**La Dey**
**CH-1732 Arconciel(CH)**

(74) Vertreter: **Zumstein, Fritz, Dr. et al**
**Bräuhausstrasse 4**
**D-8000 München 2(DE)**

(54) **Feste Lösungen von Azomethinpigmenten.**

(57) Feste Lösungen von Isoindolinon- und Isoindolinverbindungen enthaltend

a) mindestens ein Isoindolinon der Formel I

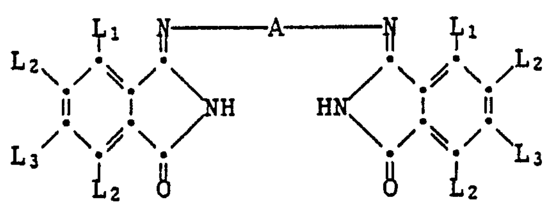

(I),

und

b) mindestens ein Isoindolin der Formel II, III oder IV

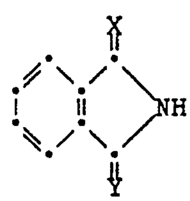

(II)

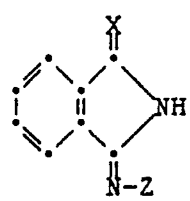

(III)

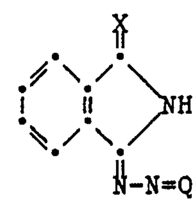

(IV)

,

wobei sich die Röntenbeugungsdiagramme der festen Lösungen von der Summe der Röntgenbeugungsdiagramme der Einzelkomponenten unterscheiden.

Für die Bedeutung der Substituenten und Symbole A, $L_1$, $L_2$, $L_3$, Q, X, Y und Z wird auf Anspruch 1 verwiesen.

Solche feste Lösungen eignen sich hervorragend als Pigmente zum Färben von hochmolekularem organischem Material.

EP 0 358 148 A2

## Feste Lösungen von Azomethinpigmenten

Die vorliegende Erfindung betrifft feste Lösungen von im Benzolkern substituierten Isoindolinonverbindungen zusammen mit Isoindolinverbindungen und ihre Verwendung zum Färben von hochmolekularem organischem Material.

Aus der US-PS 4 008 097 sind Isoindolinonpigmentmischungen, die durch Mischsynthese aus im Benzolkern unsubstituierten Isoindolinonen und substituierten p-Phenylendiaminen erhalten werden, bekannt. Obwohl diese Mischungen im allgemeinen gute Pigmenteigenschaften besitzen, vermögen sie nicht immer den heutigen hohen Anforderungen der Technik zu genügen.

Es ist nun gefunden worden, dass man überraschenderweise aus im Benzolkern substituierten Isoindolinonverbindungen zusammen mit Isoindolinverbindungen feste Lösungen erhalten kann, die sich durch hervorragende Pigmenteigenschaften auszeichnen.

Die vorliegende Erfindung betrifft demnach feste Lösungen von Isoindolinon- und Isoindolinverbindungen, enthaltend

a) mindestens ein Isoindolinon der Formel I

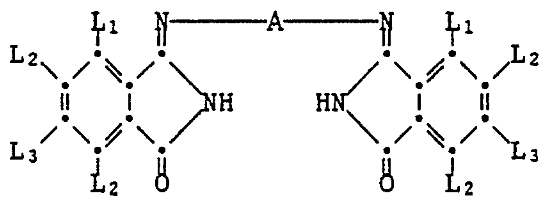

(I),

worin A eine der Gruppen

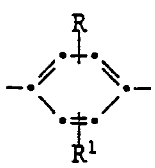

,

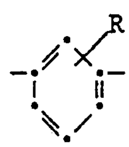

,

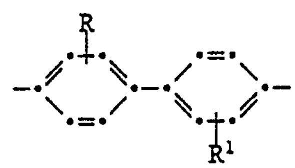

,

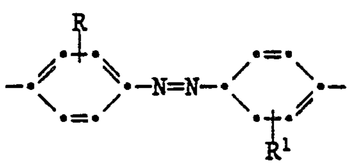

oder

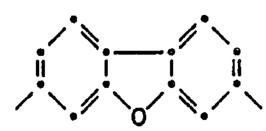

ist, worin R und $R^1$ unabhängig voneinander Wasserstoff, Halogen, $C_1$-$C_4$-Alkyl oder $C_1$-$C_4$-Alkoxy bedeuten, $L_1$ und $L_3$ unabhängig voneinander Halogen, $C_1$-$C_4$-Alkoxy, $C_1$-$C_4$-Alkylmercapto, unsubstituiertes oder durch Halogen oder $C_1$-$C_4$-Alkyl substituiertes Phenoxy und $L_2$ Halogen bedeuten, und

b) mindestens ein Isoindolin der Formeln II, III oder IV

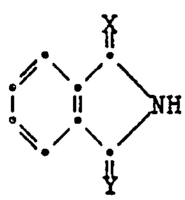

(II)

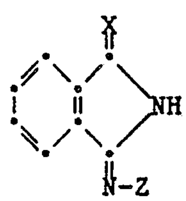

(III)

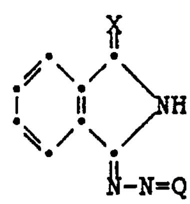

(IV)

,

worin

X und Y unabhängig voneinander eine Gruppe der Formeln

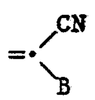 , 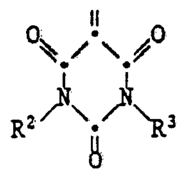 , 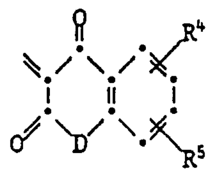 oder 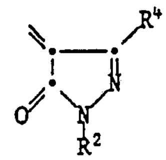 bedeuten und

B eine der Gruppen
-CN , -COO-($C_1$-$C_4$-Alkyl), -CONHR$^6$ ,

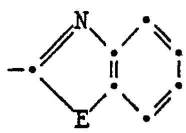 oder 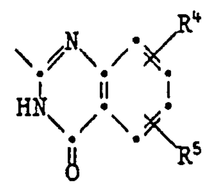 ist,

$R^2$ und $R^3$ unabhängig voneinander Wasserstoff, $C_1$-$C_4$-Alkyl, unsubstituiertes oder durch $C_1$-$C_4$-Alkyl, $C_1$-$C_4$-Alkoxy oder Halogen substituiertes Phenyl sind,
$R^4$ und $R^5$ unabhängig voneinander Wasserstoff, Halogen, $C_1$-$C_4$-Alkyl oder $C_1$-$C_4$-Alkoxy bedeuten,
$R^6$ Wasserstoff, $C_1$-$C_4$-Alkyl, unsubstituiertes oder durch Halogen, $C_1$-$C_4$-Alkyl, $C_1$-$C_4$-Alkoxy, Carbamoyl, Phenylcarbamoyl, $C_1$-$C_4$-Alkoxycarbonyl, Acetylamino oder Benzoylamino substituiertes Phenyl oder einen aromatischen heterocyclischen Rest ausgewählt aus der Gruppe bestehend aus Pyridyl, Carbazolyl, Benzthiazolyl, Chinolinyl, Chinazolyl, Chinoxalyl, Phthalamidyl, Chinolonyl, Benzimidazolonyl, Benzoxazolonyl, Benzthiazolonyl, Benzthiazothionyl, Chinazolonyl, Chinoxalonyl, Phthalazonyl, Anthrachinonyl, Acridinyl, Acridonyl, Chinazolindionyl, Chinoxalindionyl, Benzoxazinonyl und Naphthalimidyl bedeutet,
D -NH oder -O- und
E -O-, -S-, -NH- oder -N(CN)- sind,
Z eine Gruppe

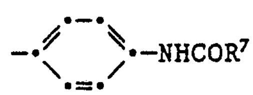 oder 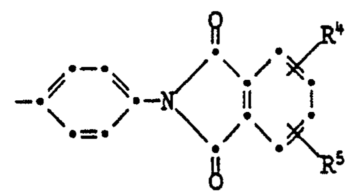

bedeutet, worin $R^7$ $C_1$-$C_4$-Alkyl, unsubstituiertes oder durch $C_1$-$C_4$-Alkyl, $C_1$-$C_4$-Alkoxy oder Halogen substituiertes Phenyl ist, und
Q eine Gruppe

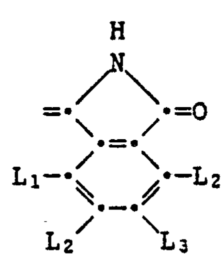

bedeutet,
wobei sich die Röntenbeugungsdiagramme der festen Lösungen von der Summe der Röntgenbeugungsdiagramme der Einzelkomponenten unterscheiden.

Bedeuten etwaige Substituenten Halogen, so handelt es sich beispielsweise um Fluor, Brom, Jod oder insbesondere um Chlor.

Bedeuten etwaige Substituenten $C_1$-$C_4$-Alkyl, so handelt es sich z.B. um Methyl, Ethyl, n-Propyl, Isopropyl, n-Butyl, sec.-Butyl, tert.-Butyl.

Bedeuten etwaige Substituenten $C_1$-$C_4$-Alkoxy, dann kann es sich z.B. um Methoxy, Ethoxy, n-Propoxy, Isopropoxy, n-Butoxy, sec.-Butoxy oder tert.-Butoxy handeln.

$L_1$ und $L_3$ bedeuten als $C_1$-$C_4$-Alkylmercapto z.B. Methylmercapto, Ethylmercapto, n-Propylmercapto, Isopropylmercapto, n-Butylmercapto, sec.-Butylmercapto, tert.-Butylmercapto.

Bevorzugte Isoindolinone als Komponente a) sind Verbindungen der Formel I, worin A eine der Gruppen

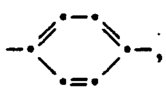, 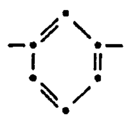, 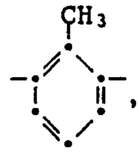, 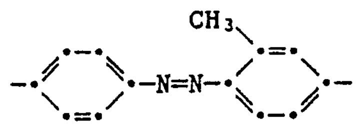 oder

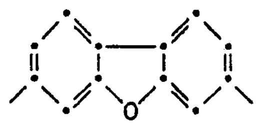 ist.

Besonders bevorzugt ist A eine der Gruppen

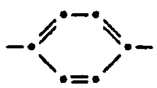, 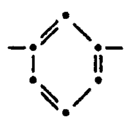 oder 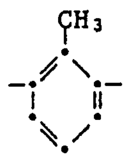.

$L_2$ ist bevorzugt Chlor und $L_1$ und $L_3$ sind bevorzugt $C_1$-$C_4$-Alkoxy und insbesondere Chlor.

Bevorzugte Isoindoline als Komponente b) sind Verbindungen der Formeln II oder III, worin X und Y unabhängig voneinander eine Gruppe der Formeln

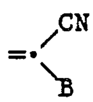 oder 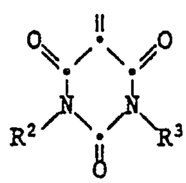 sind und

B eine der Gruppen
-CONHR[6] oder

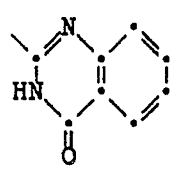

bedeutet,

$R^2$ und $R^3$ Wasserstoff, Methyl oder Phenyl sind,

$R^6$ Wasserstoff, $C_1$-$C_4$-Alkyl, unsubstituiertes oder durch Chlor, Methyl, Methoxy, Carbamoyl, Phenylcarbamoyl, Methoxycarbonyl, Acetylamino oder Benzoylamino substituiertes Phenyl ist und

Z eine Gruppe

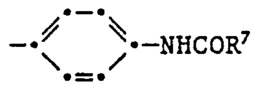 oder 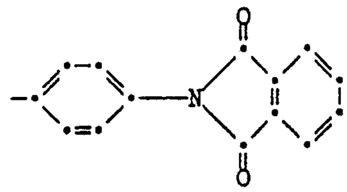

bedeutet, worin $R^7$ Methyl oder Phenyl ist.

Besonders bevorzugte Isoindoline als Komponente b) sind Verbindungen der Formel II, worin X und Y unabhängig voneinander eine Gruppe der Formeln

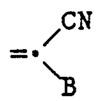 oder 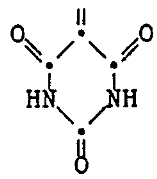 sind und

B eine der Gruppen

$-CONHR^6$ oder 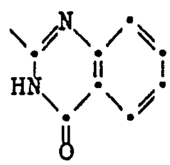

bedeutet und $R^6$ Wasserstoff, $C_1$-$C_4$-Alkyl, Phenyl oder durch Methoxycarbonyl substituiertes Phenyl ist.

Ganz besonders bevorzugte feste Lösungen enthalten

a) ein Isoindolinon der Formel

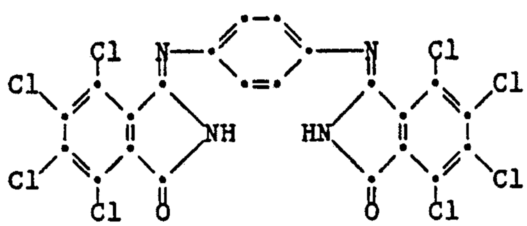

(V)

und

b) eines der Isoindoline der Formeln

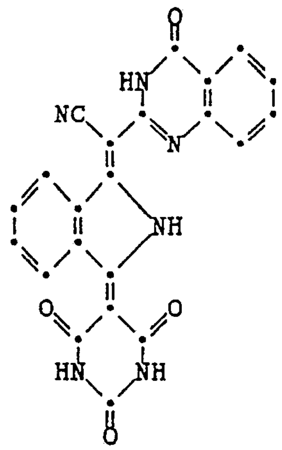

(VI)

,

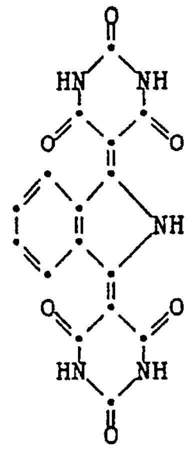

(VII)

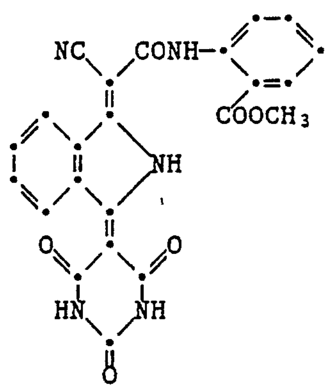

(VIII)

oder

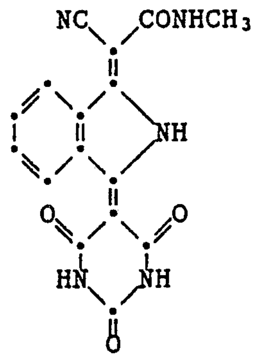

(IX)

Bei den Verbindungen der Formeln I, II, III und IV handelt es sich um bekannte Verbindungen.

In den erfindungsgemässen festen Lösungen beträgt das Verhältnis zwischen den zwei im wesentlichen die feste Lösung bildenden Komponenten a) und b) zweckmässig 5-95:95-5, bevorzugt 10-90:90-10 Gew.-%. Besonders bevorzugt enthalten die erfindungsgemässen festen Lösungen 60 - 95 Gew.% der Komponente a).

Die erfindungsgemässen festen Lösungen können ausgehend von physikalischen Mischungen der Einzelkomponenten a) und b) nach folgenden an und für sich bekannten Verfahren hergestellt werden:

- durch Kontaktierung in polaren organischen Lösungsmitteln, bevorzugt durch Verrühren der Komponentenmischung bei Rückflusstemperatur;
- durch alkalische Umfällung der Komponentenmischung in polaren organischen Lösungsmitteln oder durch Verrühren oder Mahlen derselben in polaren organischen Lösungsmitteln in Gegenwart von Basen, wie Alkoholate, Alkalihydroxide oder quaternäre Ammoniumverbindungen;
- durch intensive Mahlung oder Knetung der Komponentenmischung, gegebenenfalls mit anschliessender Rekristallisation in Wasser und/oder organischen Lösungsmitteln.

Als polare organische Lösungsmittel, in deren Gegenwart die Einzelkomponenten zur Bildung der erfindungsgemässen festen Lösungen kontaktiert werden, können beispielsweise Dimethylformamid, N-Methylformamid, Tetramethylharnstoff, Dimethylacetamid, N-Methylpyrrolidon, Dimethylsulfoxid, Tetramethylsulfon, Eisessig, Ketone, wie Cyclohexanon, Alkohole, wie n-Butanol, Cyclohexanol oder Benzylalkohol, ferner Ethylenglykol, Propylenglykol, Ether, wie Ethylenglykoldimethylether, Diphenylether oder Anisol, sowie aromatische Kohlenwasserstoffe, wie Nitrobenzol, Chlorbenzol, Dichlor- und Trichlorbenzole, Toluol und Xylole, oder Ester, wie Ethylacetat oder Butylacetat, erwähnt werden.

Bei der alkalischen Umfällung wird die physikalische Mischung der Einzelkomponenten in einem polaren organischen Lösungsmittel, bevorzugt einem Alkohol der Formel $C_rH_{2r+1}OH$, worin r eine ganze Zahl von 1 bis 5 bedeutet, durch Zugabe einer mindestens äquivalenten Menge einer Base, wie z.B einem Na-Alkoholat, z.B. Na-Methylat, -Ethylat, -Isopropylat oder -tert. Amylat, Ammoniak, Methyl- oder Dimethylamin, Natronlauge oder Kalilauge, gelöst, worauf die feste Lösung durch Verdünnen mit Wasser oder durch

Zugabe einer Mineral- oder organischen Säure, wie Salzsäure, Schwefelsäure oder Essigsäure, gefällt wird.

Bevorzugt werden die erfindungsgemässen festen Lösungen ausgehend von den physikalischen Komponentenmischungen durch Mahlung oder Knetung, beispielsweise Salzknetung in Gegenwart eines organischen Lösungsmittels, wie Diacetonalkohol, hergestellt.

Ein besonders bevorzugtes Mahlverfahren ist die Mahlung in einem organischen Lösungsmittel und/oder Wasser, insbesondere in Wasser. Dabei eignen sich als Mahlkörper insbesondere Glas- oder Keramikkugeln, Kunststoffgranulat oder Sandkörner, wie für Pigmente allgemein üblich. Trockenmahlung und Trockensalzmahlung sind ebenfalls geeignete Mahlverfahren.

Die Mahlungen und Knetungen werden zweckmässig bei Temperaturen zwischen 5 und 90°C, vorzugsweise zwischen 15 und 60°C, durchgeführt.

Bei der Trockensalzmahlung werden bevorzugt NaCl, $CaCl_2$, $Na_2SO_4$ oder $Al_2(SO_4)_3$ mit oder ohne Kristallwasser verwendet. Auf 100 bis 150 Gewichtsteile Salz werden beispielsweise 10 bis 50 Gewichtsteile des Komponentengemisches verwendet. Dabei kann es von Vorteil sein, dem Mahlmedium geringe Mengen an Lösungsmitteln, wie Xylol oder Tetrachlorethylen, und/oder Tensiden, wie z.B. Dodecylbenzolsulfonsäure-natriumsalz oder -isopropylammoniumsalz, zuzufügen. Die Aufarbeitung erfolgt nach an sich bekannten Methoden, indem das feste Lösung/Salzgemisch von den Mahlkörpern getrennt, dann in Wasser gegeben wird, und die erhaltene Suspension danach abfiltriert wird.

Wässrige Mahlungen der physikalischen Komponentenmischungen können mit oder ohne Mahlhilfsmittel, wie sie beispielsweise in EP-A-101 666, sowie in EP-A-221 853 beschrieben sind, durchgeführt werden. Dabei kann es von Vorteil sein, den pH-Wert vom neutralen in den leicht sauren oder alkalischen Bereich zu verschieben.

Obwohl die erfindungsgemässen festen Lösungen ausgezeichnete Pigmenteigenschaften aufweisen, kann es vorteilhaft sein, Texturschutzmittel zuzufügen.

Geeignete Texturschutzmittel sind beispielsweise Fettsäuren mit mindestens 12 C-Atomen, wie Stearinsäure oder Behensäure, deren Amide, Ester oder Salze, wie Magnesium-, Zink- oder Aluminiumstearat oder Magnesiumbehenat, ferner quaternäre Ammoniumverbindungen, wie Tri-($C_1$-$C_4$)-alkylbenzylammoniumsalze, ferner Weichmacher, wie epoxidiertes Sojabohnenöl, Wachse, wie Polyethylenwachs, Harzsäuren, wie Abietinsäure, Kolophoniumseife, hydriertes oder dimerisiertes Kolophonium, $C_{12}$-$C_{18}$-Paraffindisulfonsäuren, Alkylphenole oder Alkohole, wie Stearylalkohol, ferner Lauryl- oder Stearylamin, sowie aliphatische 1,2-Diole, wie Dodecandiol-1,2.

Bevorzugte Texturschutzmittel sind Lauryl- oder Stearylamin, aliphatische 1,2-Diole, Stearinsäure, deren Amide, Salze oder Ester, epoxidiertes Sojabohnenöl, Wachse oder Harzsäuren.

Solche Zusatzstoffe können in Mengen von 0,05 bis 20, bevorzugt 1 bis 10 Gew.%, bezogen auf die feste Lösung, vor, während oder nach deren Bildung zugegeben werden.

Feste Lösungen können durch ihr Röntgenbeugungsspektrum gekennzeichnet werden, welches sich von demjenigen des physikalischen Gemisches der beiden Einzelkomponenten unterscheidet. Das Röntgenbeugungsdiagramm der erfindungsgemässen festen Lösungen ist durch andere Linien als die Summe der Röntgenbeugungsdiagramme der Einzelkomponenten gekennzeichnet.

Die erfindungsgemässen festen Lösungen weisen interessante grünstichiggelbe bis orange Nuancen auf und ergeben Ausfärbungen von ausgezeichneter Licht-, Wetter-, Hitze- und Migrationsbeständigkeit. Gegenüber entsprechenden physikalischen Mischungen weisen sie zudem oft überraschende Nuancenverschiebungen auf.

Die erfindungsgemässen festen Lösungen eignen sich ausgezeichnet als Pigmente zum Färben von hochmolekularem organischem Material. Sie weisen gegenüber den Ausgangspigmenten unterschiedliche koloristische Eigenschaften auf und können je nach dem Herstellungsverfahren in transparenter oder deckender Form vorliegen. Durch thermische Nachbehandlung in organischen Lösungsmitteln lassen sie sich beispielsweise gut rekristallisieren, d.h. man erhält eine deckende Form mit einer einheitlichen Pigmentpartikelgrösse und -form. Vorzugsweise verwendet man als organische Lösungsmittel z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole, Pentanole, oder Tricyclodecanalkohole, Ether, wie Ethylenglykomonomethyl- oder -monoethylether, Amide wie Dimethylformamid oder N-Methylpyrrolidon, sowie Dimethylsulfoxid oder Sulfolan.

Hochmolkulare organische Materialien, die mit den erfindungsgemässen festen Lösungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisations- oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen festen Lösungen zum Einfärben von Polyvinylchlorid und Polyolefinen, wie Polyethylen und Polypropylen, sowie zum Pigmentieren von Lacken und Anstrichstoffen, insbesondere Automobildecklacken.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen festen Lösungen als Toner oder in Form von Präparaten einzusetzen.

Bezogen auf das zu pigmentierende hochmolekulare organische Material kann man die erfindungsgemässen festen Lösungen in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen festen Lösungen erfolgt beispielsweise derart, dass man eine solche feste Lösung, gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen festen Lösungen in die Polymeren eingearbeitet werden. Zwecks Erzielung verschiedener Farbtöne ist es ferner möglich, den hochmolekularen organischen Stoffen neben den erfindungsgemässen festen Lösungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen festen Lösungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, sowie in Lacken zeichnen sich die erfindungsgemässen festen Lösungen durch gute allgemeine Pigmenteigenschaften, wie gute Dispergierbarkeit, hohe Farbstärke und Reinheit, gute Migrations-, Hitze-, Licht- und Wetterbeständigkeit aus.

Die nachfolgenden Beispiele erläutern die Erfindung.

Beispiel 1:

68,0 g Isoindolinon der Formel V

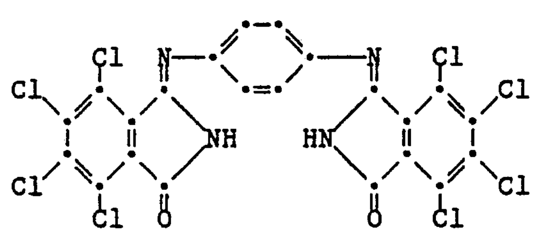

(V)

,

12,0 g des Isoindolins der Formel VI

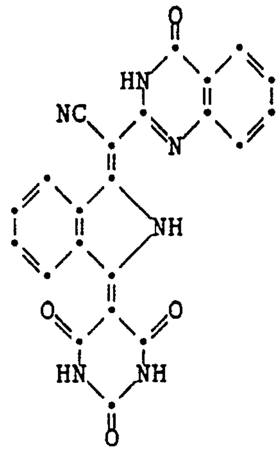

(VI) ,

4,2 g 8-Hydroxymethyl-tricyclo[5,2,1,$0^{2,6}$]decan (®TCD-Alkohol M, HOECHST) und 630 ml Wasser werden in einem Becherglas während 1 Stunde gut verrührt. In einer ®DYNO-Mühle, Typ KDL der Firma Willy A. Bachofen, Basel, versehen mit einem 600 ml fassenden Stahlmahlbehälter, gefüllt mit 480 - 510 ml Glaskugeln mit einem Durchmesser von ca. 1 mm, wird die erhaltene Suspension bei einer Rührgeschwindigkeit von 3000 U/Min. und einer Pumpenförderung von 400 ml/Min. intensiv bei 20 - 25° C während 95 Minuten gemahlen. Die Mühle wird mit 1 l Wasser im Durchlauf gewaschen, dann werden die vereinigten Suspensionen abfiltriert. Der Presskuchen wird mit Wasser gewaschen, im Vakuumtrockenschrank bei 80° C getrocknet und gepulvert. Man erhält eine gelbe feste Lösung, deren Röntgenbeugungsdiagramm sich vom Röntgenbeugungsdiagramm der physikalischen Mischung der obengenannten Ausgangsprodukte unterscheidet. Beim Einarbeiten der festen Lösung in Kunststoffe und Lacke erhält man sehr transparente, farbstarke orangefarbige Ausfärbungen mit ausgezeichneten Beständigkeiten.

5 g der oben beschriebenen orangefarbigen feinkristallinen festen Lösung werden in 80 ml o-Dichlorbenzol während 6 Stunden bei 145° C verrührt. Die Suspension wird bei 40° C abfiltriert, der Presskuchen mit etwas Methanol gewaschen, im Vakuumtrockenschrank bei 80° C getrocknet und gepulvert. Dabei erhält man die oben beschriebene feste Lösung in rekristallisierter grobkristalliner Form, welche beim Einarbeiten in Kunststoffe und Lacke deckende orangefarbige Ausfärbungen mit ausgezeichneten Hitze-, Licht-und Wetterbeständigkeiten ergibt.

Beispiel 2:

Verfährt man analog wie in Beispiel 1 beschrieben, verwendet aber anstelle des Isoindolins der Formel VI das Isoindolin der Formel VII

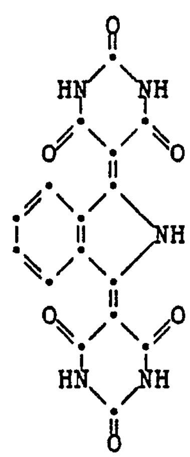

(VII) ,

so erhält man eine feste Lösung, deren Röntgenbeugungsdiagramm sich vom Röntgenbeugungsdiagramm der physikalischen Mischung der obengenannten Ausgangsprodukte unterscheidet.

Durch Rekristallisation in organischen Lösungsmitteln wie o-Dichlorbenzol, Xylol oder N-Methylpyrrolidon, erhält man die opake Form der festen Lösung, welche gegenüber der reinen Pigmentform des Isoindolinons der Formel V deutlich opakere rotstichiggelbe Ausfärbungen bei der Einarbeitung in Kunststoffe und Lacke ergibt.

Beispiel 3:

Verfährt man analog wie in Beispiel 1 beschrieben, verwendet aber anstelle des Isoindolins der Formel VI das Isoindolin der Formel VIII

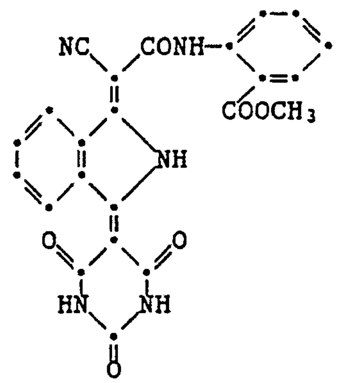

(VIII),

so erhält man eine rotstichiggelbe feste Lösung, deren Röntgenbeugungsdiagramm sich vom Röntgenbeugungsdiagramm der physikalischen Mischung der obengenannten Ausgangsprodukte unterscheidet. Bei deren Einarbeitung in Kunststoffe und Lacke erhält man sehr farbstarke, reine rotstichiggelbe Ausfärbungen mit ausgezeichneten Hitze-, Licht-, Migrations- und Wetterbeständigkeiten.

Beispiel 4:

48,0 g des Isoindolinons der Formel V,
12,0 g des Isoindolins der Formel IX

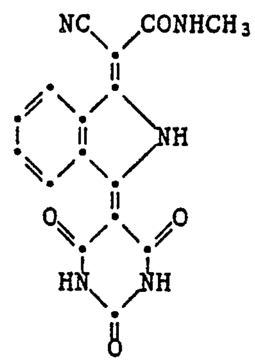

(IX) ,

3,2 g 8-Hydroxymethyl-tricyclo[5,2,1,$0^{2,6}$]decan (®TCD-Alkohol M, Hoechst) und 550 ml Wasser werden in einem Becherglas während 1 Stunde gut verrührt. In einer ®DYNO-Mühle, Typ KDL der Firma Willy A. Bachofen, Basel, versehen mit einem 600 ml fassenden Stahlmahlbehälter, gefüllt mit 480-510 ml Glaskugeln mit einem Durchmesser von ca. 1 mm, wird die erhaltene Pigmentsuspension bei einer Rührgeschwindigkeit von 3000 U/Min. und einer Pumpenförderung von 400 ml/Min. intensiv bei 20-25 °C während 70 Minuten gemahlen. Die Mühle wird mit 1 l Wasser im Durchlauf gewaschen, danach werden die vereinigten Suspensionen abfiltriert. Der Presskuchen wird mit Wasser gewaschen, im Vakuumtrockenschrank bei 80 °C getrocknet und gepulvert. Man erhält eine gelbe feste Lösung, deren Röntgenbeugungsdiagramm sich vom Röntgenbeugungsdiagramm der physikalischen Mischung der obengenannten Ausgangsprodukte unterscheidet. Beim Einarbeiten der festen Lösung in Kunststoffe und Lacke erhält man reine, sehr farbstarke, migrations-, licht-, hitze- und wetterbeständige gelbe Ausfärbungen.

Beispiel 5:

Verfährt man analog wie in Beispiel 4 beschrieben, verwendet aber anstelle des Isoindolinons der Formel V das Isoindolinon der Formel X

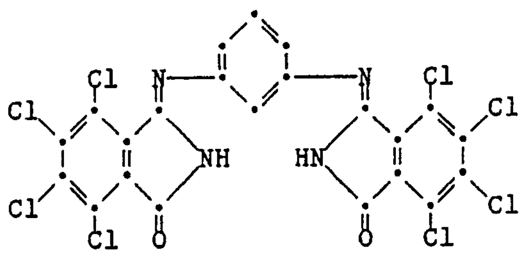

(X),

so erhält man eine grünstichiggelbe feste Lösung, deren Röntgenbeugungsdiagramm sich vom Röntgenbeugungsdiagramm der physikalischen Mischung der obengenannten Ausgangsverbindungen unterscheidet. Beim Einarbeiten der festen Lösung in Kunststoffe un Lacke erhält man reine grünstichiggelbe, sehr farbstarke migrations-, licht- und hitzebeständige Ausfärbungen.

Beispiel 6:

40 mg der gemäss Beispiel 2 erhaltenen festen Lösung werden mit 7,3 ml Dioctylphthalat und 13,3 g eines stabilisierten Polyvinylchlorids vom Typ ®LONZA E 722 in einem Becherglas mit einem Glasstab gut vermischt. Das Gemisch wird auf einem Walzenstuhl während 5 Minuten bei 160°C zu einer dünnen Folie verarbeitet. Die so erzeugte PVC-Folie weist eine sehr farbstarke, migrations- und lichtbeständige gelbe Färbung auf.

| Beispiel 7: Eine Mischung von | |
|---|---|
| 130 g | Steatitkugeln (ø = 8 mm) |
| 47,5 g | eines thermohärtenden Acryllacks, bestehend aus |
| 41,3 g | Acrylharz ®VIACRYL VC 373, 60 % (VIANOVA Kunstharz AG), |
| 16,3 g | Melaminharz ®MAPRENAL TTX, 55 % (HOECHST AG), |
| 32,8 g | Xylol, |
| 4,6 g | Ethylglykolacetat, |
| 2,0 g | Butylacetat und |
| 1,0 g | ®Silikonöl A, 1 % in Xylol (BAYER AG), und |
| 2,5 g | der nach Beispiel 2 erhaltenen festen Lösung |

wird in einer 200 ml Glasflasche mit "Twist-Off"-Verschluss während 72 Stunden auf dem Rollgestell dispergiert. Nach Abtrennen der Steatitkugeln werden

| | |
|---|---|
| 8,0 g | der so dispergierten Volltonmischung, |
| 0,6 g | Aluminiumpaste ®ALCOA (60-65 % Al-Gehalt, Aluminium Corp. of America), |
| 1,0 g | Methylethylketon und |
| 18,4 g | des obigen thermohärtenden Acryllacks |

gut vermischt, auf Aluminiumbleche gespritzt und anschliessend während 30 Minuten bei 130°C eingebrannt.

Man erhält sehr farbstarke rotstichig-gelbe Metalleffektlackierungen mit ausgezeichneten Beständigkeiten.

Verwendet man anstelle der festen Lösung gemäss Beispiel 2 eine andere feste Lösung gemäss einem der anderen Beispiele, so erhält man ebenso hochwertige Ausfärbungen.

Beispiel 8:

Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%ig in Xylol, 36 g Melaminharz ®SUPER-BECKAMIN 13-501 (Reichhold Chemie AG) 50%ig in Xylol:Butanol (2:1-Gemisch), 2 g Xylol und 2 g Ethylenglykolmonomethylether, und 2,5 g der nach Beispiel 1 erhaltenen festen Lösung werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 6,0 g Titandioxid ®KRONOS RN 59 (KRONOS Titan GmbH) und weiteren 24,0 g des obigen Alkydmelamineinbrennlacks vermischt. Das erhaltene Gemisch wird auf Aluminium bleche gespritzt und anschliessend während 30 Minuten bei 130 °C eingebrannt. Man erhält orange Ausfärbungen mit ausgezeichneten Beständigkeiten.

Beispiel 9:

Eine Mischung bestehend aus 1,0 g der nach Beispiel 2 erhaltenen festen Pigmentlösung, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert, das so erhaltene Granulat wird auf der Spritzgussmaschine (Allround Aarburg 200) bei 220 °C zu Platten verspritzt und 5 Minuten bei 180 °C nachgepresst. Die Pressplatten weisen farbstarke rotstichiggelbe Nuancen mit ausgezeichneten Beständigkeiten auf.

Beispiel 10:

1000 g Polypropylengranulat (®DAPLEN PT-55, Chemie LINZ) und 20 g eines 50%igen Pigmentpräparates, bestehend aus 10 g der nach Beispiel 5 erhaltenen festen Pigmentlösung und 10 g Mg-Behenat, werden in einer Mischtrommel intensiv vermischt. Das so behandelte Granulat wird bei 260 bis 285 °C nach dem Schmelzspinnverfahren versponnen. Man erhält grünstichiggelbgefärbte Fasern mit sehr guten Licht- und textilen Echtheiten.

**Ansprüche**

1. Feste Lösungen von Isoindolinon- und Isoindolinverbindungen, enthaltend a) mindestens ein Isoindolinon der Formel I

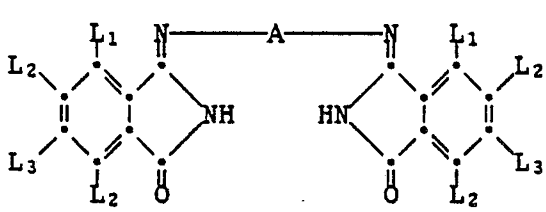

(I),

worin A eine der Gruppen

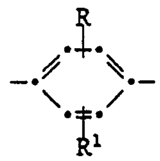 , 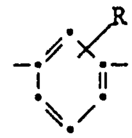 , 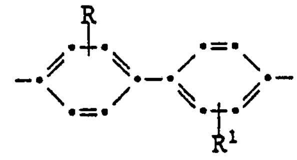 ,

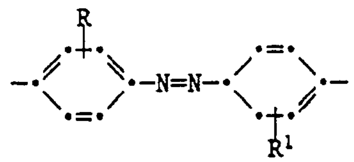 oder 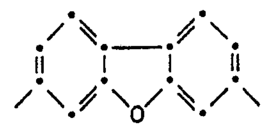

ist, worin R und $R^1$ unabhängig voneinander Wasserstoff, Halogen, $C_1$-$C_4$-Alkyl oder $C_1$-$C_4$-Alkoxy bedeuten, $L_1$ und $L_3$ unabhängig voneinander Halogen, $C_1$-$C_4$-Alkoxy, $C_1$-$C_4$-Alkylmercapto, unsubstituiertes oder durch Halogen oder $C_1$-$C_4$-Alkyl substituiertes Phenoxy und $L_2$ Halogen bedeuten, und

b) mindestens ein Isoindolin der Formeln II, III oder IV

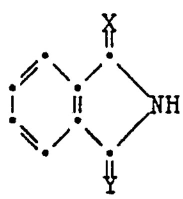 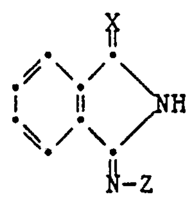 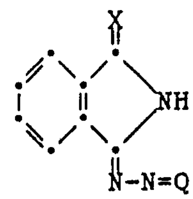 ,

(II) (III) (IV)

worin

X und Y unabhängig voneinander eine Gruppe der Formeln

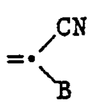 , 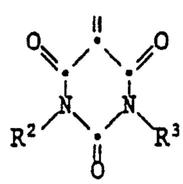 , 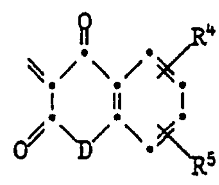 oder 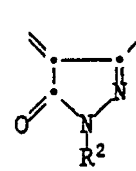 bedeuten und

B eine der Gruppen

-CN , -COO-($C_1$-$C_4$-Alkyl), -CONHR[6] ,

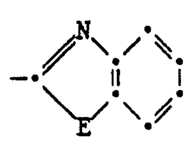 oder 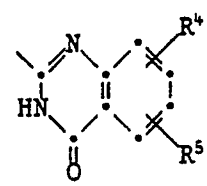 ist,

$R^2$ und $R^3$ unabhängig voneinander Wasserstoff, $C_1$-$C_4$-Alkyl, unsubstituiertes oder durch $C_1$-$C_4$-Alkyl, $C_1$-$C_4$-Alkoxy oder Halogen substituiertes Phenyl sind,

$R^4$ und $R^5$ unabhängig voneinander Wasserstoff, Halogen, $C_1$-$C_4$-Alkyl oder $C_1$-$C_4$-Alkoxy bedeuten,

$R^6$ Wasserstoff, $C_1$-$C_4$-Alkyl, unsubstituiertes oder durch Halogen, $C_1$-$C_4$-Alkyl, $C_1$-$C_4$-Alkoxy, Carbamoyl, Phenylcarbamoyl, $C_1$-$C_4$-Alkoxycarbonyl, Acetylamino oder Benzoylamino substituiertes Phenyl oder einen aromatischen heterocyclischen Rest ausgewählt aus der Gruppe bestehend aus Pyridyl, Carbazolyl, Benzthiazolyl, Chinolinyl, Chinazolyl, Chinoxalyl, Phthalamidyl, Chinolonyl, Benzimidazolonyl, Benzoxazolonyl, Benzthiazolonyl, Benzthiazothionyl, Chinazolonyl, Chinoxalonyl, Phthalazonyl, Anthrachinonyl, Acridinyl, Acridonyl, Chinazolindionyl, Chinoxalindionyl, Benzoxazinonyl und Naphthalimidyl bedeutet,

D -NH oder -O- und

E -O-, -S-, -NH- oder -N(CN)- sind,
Z eine Gruppe

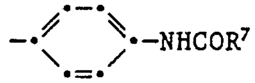 oder 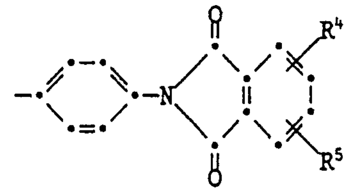

bedeutet, worin $R^7$ $C_1$-$C_4$-Alkyl, unsubstituiertes oder durch $C_1$-$C_4$-Alkyl, $C_1$-$C_4$-Alkoxy oder Halogen substituiertes Phenyl ist, und
Q eine Gruppe

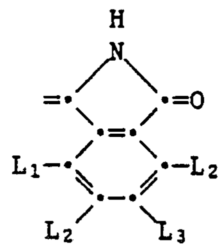

bedeutet,
wobei sich die Röntenbeugungsdiagramme der festen Lösungen von der Summe der Röntgenbeugungsdiagramme der Einzelkomponenten unterscheiden.

2. Feste Lösungen gemäss Anspruch 1, enthaltend als Komponente a) mindestens ein Isoindolinon der Formel I, worin A eine der Gruppen

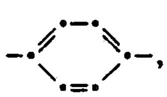, 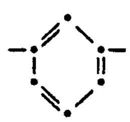, 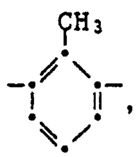, 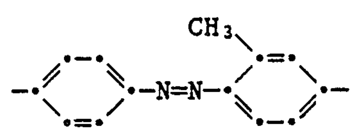 oder

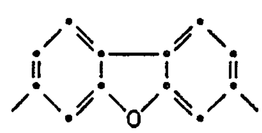 ist,

$L_2$ Chlor und $L_1$ und $L_3$ $C_1$-$C_4$-Alkoxy oder Chlor bedeuten.

3. Feste Lösungen gemäss Anspruch 1, enthaltend als Komponente a) mindestens ein Isoindolinon der Formel I, worin A eine der Gruppen

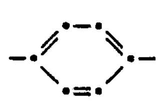, 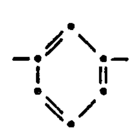 oder 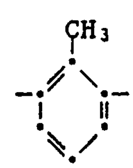 ist

und $L_1$, $L_2$ und $L_3$ Chlor bedeuten.

4. Feste Lösungen gemäss Anspruch 1, enthaltend als Komponente b) mindestens ein Isoindolin der Formeln II oder III, worin
X und Y unabhängig voneinander eine Gruppe der Formeln

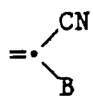 oder 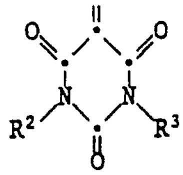 sind und

B eine der Gruppen

$-CONHR^6$ oder 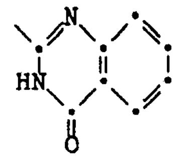

bedeutet,
$R^2$ und $R^3$ Wasserstoff, Methyl oder Phenyl sind,
$R^6$ Wasserstoff, $C_1$-$C_4$-Alkyl, unsubstituiertes oder durch Chlor, Methyl, Methoxy, Carbamoyl, Phenylcarbamoyl, Methoxycarbonyl, Acetylamino oder Benzoylamino substituiertes Phenyl ist und
Z eine Gruppe

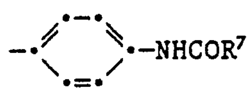 oder 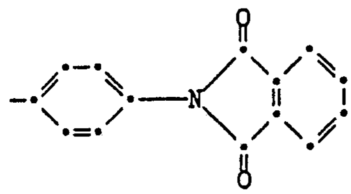

bedeutet, worin $R^7$ Methyl oder Phenyl ist.

5. Feste Lösungen gemäss Anspruch 1, enthaltend als Komponente b) mindestens ein Isoindolin der Formel II, worin
X und Y unabhängig voneinander eine Gruppe der Formeln

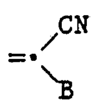 oder 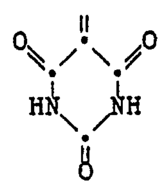 sind und

B eine der Gruppen

$-CONHR^6$ oder 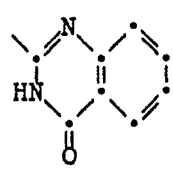

bedeutet und $R^6$ Wasserstoff, $C_1$-$C_4$-Alkyl, Phenyl oder durch Methoxycarbonyl substituiertes Phenyl ist.

6. Feste Lösungen gemäss Anspruch 1, enthaltend
a) ein Isoindolinon der Formel

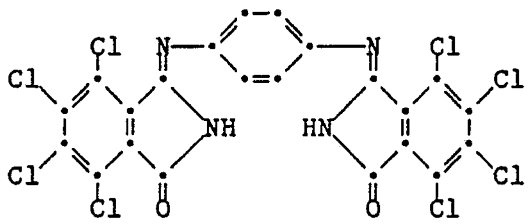

und

(V)

b) eines der Isoindoline der Formeln

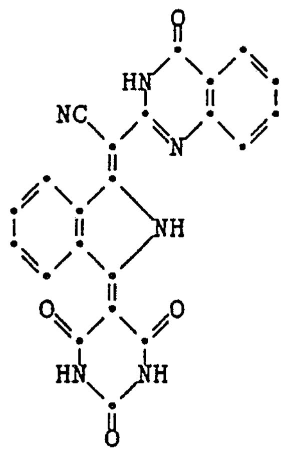

,

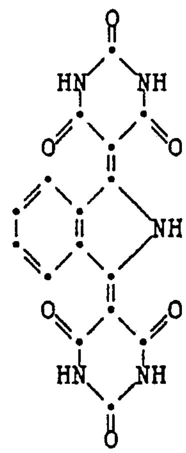

(VI)

(VII)

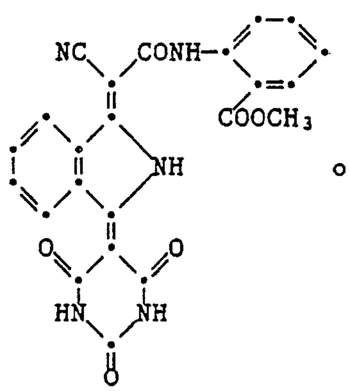

oder

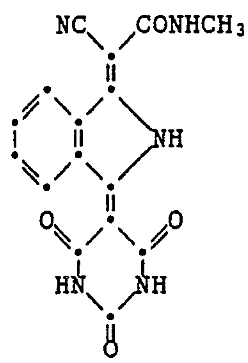

(VIII)

(IX)

.

7. Hochmolekulares organisches Material enthaltend feste Lösungen gemäss Anspruch 1.